# EUROPÄISCHE PATENTSCHRIFT

(11) **EP 3 784 536 B1**
(45) Veröffentlichungstag und Bekanntmachung des Hinweises auf die Patenterteilung: **12.10.2022**
(21) Anmeldenummer: 18723437.2
(22) Anmeldetag: 26.04.2018
(51) Int. Cl.: B60T 1/00, B60T 1/06, F16H 63/34

(54) **PARKSPERRENEINHEIT UND ANTRIEBSANORDNUNG MIT EINER SOLCHEN PARKSPERRENEINHEIT**
PARKING LOCK UNIT AND DRIVE ARRANGEMENT HAVING A PARKING LOCK UNIT OF SAID TYPE
UNITÉ DE FREIN DE STATIONNEMENT ET ENSEMBLE D'ENTRAÎNEMENT COMPORTANT UNE TELLE UNITÉ DE FREIN DE STATIONNEMENT

(43) Veröffentlichungstag der Anmeldung: 03.03.2021
(73) Patentinhaber: GKN Automotive Limited, Birmingham, West Midlands B37 7YE (GB)
(72) Erfinder: MIEBACH, Sascha, 53819 Neunkirchen-Seelscheid (DE); SCHMIDT, Mark, 53639 Königswinter (DE); BROICHER, Simon, 50354 Hürth (DE); SZILAGYI, Ervin, 53819 Neunkirchen-Seelscheid (HU)
(74) Vertreter: Neumann Müller Oberwalleney Patentanwälte PartG mbB
(86) Internationale Anmeldenummer: PCT/EP2018/060816
(87) Internationale Veröffentlichungsnummer: WO 2019/206422

(56) Entgegenhaltungen:
- WO-A1-2018/001476
- DE-A1- 10 143 386
- DE-A1-102007 007 681
- DE-A1-102011 082 169

## Beschreibung

Die Erfindung betrifft eine Parksperreneinheit für eine Antriebsanordnung eines Kraftfahrzeuges, insbesondere mit einem Elektromotor, sowie eine Antriebsanordnung mit einer solchen Parksperreneinheit.

In einer Antriebsanordnung kann eine Parksperreneinheit vorgesehen sein, deren Hauptaufgabe es ist, das Fahrzeug im geparkten Zustand sicher festzuhalten. Insbesondere durch den Einsatz elektrisch betätigter Feststellbremsen anstatt mechanischer betätigter Feststellbremsen ist die Parksperre immer häufiger die Hauptsicherung gegen ungewolltes Bewegen des Fahrzeugs. Die sperrende Wirkung wird dabei in der Regel durch ein Sperrelement erreicht, das formschlüssig in ein Parksperrenrad einrastet. Die Parksperreneinheit ist dabei mechanisch oder elektromechanisch so ausgelegt, dass ein ungewolltes Einlegen oberhalb einer Fahrzeuggeschwindigkeit von 5 km/h ausgeschlossen wird. Unterhalb von 5 km/h kann es somit zu einem Einlegen der Parksperreneinheit kommen. Durch den resultierenden Drehmomentstoß werden die Maschinenelemente im Leistungspfad zwischen der Parksperre und den Reifen einerseits und zwischen der Parksperre und der Antriebseinheit andererseits belastet und müssen dementsprechend dimensioniert werden.

Aus der gattungsbildenden WO 2018/001476 A1 ist eine Parksperreneinheit für eine Elektroantriebsanordnung bekannt. Die Parksperreneinheit umfasst ein Parksperrengehäuse, einen hülsenförmigen Wellenansatz, der im Parksperrengehäuse drehbar gelagert ist, wobei der Wellenansatz ein Verbindungsprofil zum drehfesten Verbinden mit einer Antriebswelle der Elektroantriebsanordnung aufweist. Ein Sperrenrad ist mit dem Wellenansatz drehfest verbunden und weist einen geraden Radkörper auf. Ein Sperrelement, das in dem Parksperrengehäuse bewegbar gelagert ist und durch einen steuerbaren Aktuator in eine Schließposition zum Blockieren des Sperrenrads und in eine Freigabeposition zum Freigeben des Sperrenrads überführbar ist.

Aus der DE 10 2011 082 169 A1 ist eine Parksperrenvorrichtung mit einem Parksperrenrad, einer Parksperrenklinke und einem Bolzen zur Lagerung der Klinke bekannt. Das Parksperrenrad ist mit einer Getriebeabtriebswelle eines Automatikgetriebes eines Kraftfahrzeuges verbunden. Koaxial zum Parksperrenrad ist ein Stirnrad angeordnet. Zwischen der Klinke und dem Stirnrad ist eine Trägerplatte angeordnet, in welcher der Bolzen gelagert ist.

Aus der DE 10 2007 007 681 A1 ist eine Parksperrenvorrichtung für ein automatisches Getriebe eines Fahrzeuges bekannt. Die Vorrichtung umfasst ein Parksperrenrad mit einer gewölbten Seitenfläche.

Der vorliegenden Erfindung liegt die Aufgabe zugrunde, eine Parksperreneinheit für eine Antriebsanordnung vorzuschlagen, die durch Ihren Aufbau die Belastung der Maschinenelemente der Antriebsanordnung beim Einrasten der Parksperre reduziert. Die Aufgabe besteht ferner darin, eine entsprechende Antriebsanordnung mit einer solchen Parksperreneinheit vorzuschlagen, die ein sicheres Blockieren des Leistungspfades ermöglicht, kinetische Energie beim Einlegen der Parksperre absorbieren kann und einen geringen Bauraum beansprucht.

Zur Lösung der Aufgabe wird eine Parksperreneinheit für eine Antriebsanordnung, insbesondere mit einem Elektromotor, vorgeschlagen, umfassend: Ein Parksperrengehäuse, ein Parksperrenrad, das mit einem durch zumindest ein Lager um eine Drehachse drehbar gelagerten Teil der Antriebsanordnung drehfest verbunden ist und einen Verbindungsabschnitt sowie einen gegenüber diesem axial versetzten Rastabschnitt, die über einen Stegabschnitt miteinander verbunden sind, aufweist; ein Sperrelement, das in dem Parksperrengehäuse gelagert ist und eine Drehbewegung des Parksperrenrades um eine Längsachse des Parksperrenrades sperren und freigeben kann, und einen steuerbaren Sperraktuator, der das Sperrelement reversibel in eine das Parksperrenrad sperrende Position und eine das Parksperrenrad freigebende Position überführen kann, wobei eine Mittenebene des Rastabschnitts des Parksperrenrades zu einer Mittenebene des Verbindungsabschnitts des Parksperrenrades einen Abstand aufweist, der größer ist als eine kleinste axiale Dicke des Stegabschnitts.

Durch das Einlegen der Parksperre wird die kinetische Energie der rotierenden Teile des Leistungspfads zwischen dem Parksperrenrad und den Reifen einerseits und zwischen dem Parksperrenrad und der Antriebseinheit andererseits in Stoßenergie umgewandelt. Durch den Stoß wirkt auf das Parkrad eine radiale Kraftkomponente und eine tangentiale Kraftkomponente, die zudem ein Torsionsmoment induziert. Durch den axialen Versatz des Rastabschnitts gegenüber dem Verbindungsabschnitt weist die vorgeschlagene Parksperreneinheit den Vorteil auf, dass die Torsionslänge des Leistungspfads zwischen der Parksperre und den Reifen einerseits und zwischen der Parksperre und der Antriebseinheit andererseits erhöht wird und die Torsionssteifigkeit des Leistungspfades kleiner wird. Zudem kann dadurch der Rastabschnitt des Parksperrenrades radial einfedern, sodass Deformationsenergie elastisch im Parkrad gespeichert werden kann. Durch die beiden zuvor genannten Effekte kann ein höherer Anteil der Stoßenergie beim Einlegen der Parksperre elastisch in Spannenergie bzw. Deformationsenergie umgesetzt und die Belastung der Maschinenelemente der Antriebsanordnung verringert werden. Erfindungsgemäß weist daher eine Mittenebene des Rastabschnitts des Parksperrenrades zu einer Mittenebene des Verbindungsabschnitts des Parksperrenrades einen ersten Abstand auf, der größer ist als eine kleinste axiale Dicke des Stegabschnitts.

Als Mittenebene der Bauteile bzw. der Abschnitte der Bauteile soll jeweils die gedachte Ebene verstanden werden, die normal auf der Rotationsachse des jeweiligen Bauteils steht und in der Mitte der Erstreckung des jeweiligen Bauteils bzw. Abschnitts des Bauteils entlang seiner Rotationsachse angeordnet ist.

Der Rastabschnitt des Parksperrenrades ist ein weitgehend ringförmiger Körper, der radial außenliegend angeordnet ist und mehrere Rastausnehmungen umfasst, die gleichmäßig auf dem Umfang verteilt sind. In die Rastausnehmungen kann das Sperrelement eingreifen und den Rotationsfreiheitsgrad des Parksperrenrades blockieren. Die Ausnehmungen können zusammen mit dem Sperrelement derart gestaltet sein, dass oberhalb einer kritischen Rotationsgeschwindigkeit das Sperrelement abgewiesen und somit ein Einlegen der Parksperre mechanische verhindert wird (Ratcheting). Die Breite B1 des Rastabschnitts kann so gewählt werden, dass die beim Einlegen der Parksperre entstehenden Kräfte und Pressungen sicher übertragen werden können.

Der Verbindungsabschnitt des Parksperrenrades ist ein weitgehend ringförmiger Körper, der den radial innenliegenden Teil des Parksperrenrades bildet. Die Schnittfläche eines Halblängsschnitts des Verbindungsabschnitts kann T-förmig gestaltet sein. Der Verbindungsabschnitt umfasst dann einen weitgehenden hülsenförmigen Teil, der sich um die Rotationsachse des Parksperrenrades erstreckt, und einen davon nach radial außen stehenden Teil. Der hülsenförmige Teil des Verbindungsabschnitts dient dazu, das Parksperrenrad mit einem drehbar gelagerten Teil einer Antriebsanordnung zu verbinden. Dazu kann der Bereich des Innenumfangs zylindrisch für einen Pressverband gestaltet sein oder eine Verbindungsstruktur, beispielsweise eine Keilverzahnung, aufweisen. Es ist auch jede andere Ausgestaltung als Welle-Nabe-Verbindung denkbar, die eine drehfeste Verbindung ermöglicht. Die Breite B3 des hülsenförmigen Teils, wird durch den Bereich definiert, der in Kontakt mit dem drehbar gelagerten Element der Antriebsanordnung steht und Drehmoment übertragen kann. Die Breite B3 ist dabei so gewählt, dass die auftretenden Drehmomente durch die Welle-Nabe-Verbindung sicher übertragen werden können. In einer möglichen Ausführungsform kann das Verhältnis von der Breite B1 des Parksperrenrades an dem Außendurchmesser zu einer Breite B3 des Parksperrenrades an einem Innendurchmesser kleiner 1,0, insbesondere kleiner 0,85, insbesondere kleiner als 0,8, und/oder größer 0,7, insbesondere größer 0,75, sein. An den hülsenförmigen Teil kann in axialer Richtung ein Positionsabsatz anschließen, der so ausgestaltet ist, dass das Parksperrenrad gegenüber dem Bauteil, mit dem es drehfest verbunden ist, axial positioniert und abgestützt werden kann.

Der Verbindungsabschnitt kann einen radial nach außenstehenden Teil umfassen, das der definierten Einleitung der Kräfte und Drehmomente vom Stegabschnitt in den hülsenförmigen Teil des Verbindungsabschnitts dient. Der radial nach außenstehende Teil kann mittig zum hülsenförmigen Teil angeordnet sein, sodass eine gleichmäßige, insbesondere symmetrische, Lastverteilung in der Welle-Nabe-Verbindung gewährleistet ist. Der Übergang in den Verbindungsabschnitt kann an der Stelle angeordnet sein, an der der Radkörper von einer geraden Form in eine angewinkelte Form übergeht. Es ist auch denkbar, dass der radial nach außenstehende Teil entfällt und der Stegabschnitt direkt an den hülsenförmigen Teil des Verbindungsabschnitts anschließt.

Die Mittenebenen des Rastabschnitts und des Verbindungsabschnitts sind entlang der Längsachse des Parksperrenrades beabstandet, sodass das Parksperrenrad eine gekröpfte Form aufweist. In einer möglichen Ausführungsform kann das Verhältnis des ersten Abstandes A1 zu einem Außendurchmesser Da des Parksperrenrades größer als 0,08, insbesondere größer als 0,10, und/oder kleiner als 0,5, insbesondere kleiner als 0,4, sein. In einer weiteren Ausführungsform kann das Verhältnis des ersten Abstandes A1 zu einer Breite B1 des Parksperrenrades an dem Außendurchmesser größer als 0,85, insbesondere größer 0,9, insbesondere größer als 0,95, und /oder kleiner als 3, insbesondere kleiner als 2,7, sein.

Zwischen den beiden zuvor beschriebenen Abschnitten des Parksperrenrades erstreckt sich der Stegabschnitt, dessen Form so gewählt wird, dass im Vergleich zu einem geraden Radkörper die radiale Steifigkeit und die Torsionssteifigkeit des Parksperrenrades reduziert sind. Der Stegabschnitt kann somit auch als Federabschnitt bezeichnet werden. In einer möglichen Ausgestaltung kann dazu der Stegabschnitt zumindest in einem Teilbereich eine dünnere Wandung als der Rastabschnitt und der Verbindungsabschnitt aufweisen. In einer weiteren Ausführungsform kann dazu eine Breite der Wandung des Stegabschnitts zumindest in einem Teilbereich von radial außen nach radial innen so zunehmen, dass die auftretenden Spannungen in diesem Teilbereich zumindest weitgehend konstant sind. Hierdurch wird eine effiziente Werkstoffbeanspruchung bei geringer Torsions- bzw. Biegesteifigkeit hergestellt. Unter zumindest weitgehend konstanten Spannungen sollen auch Spannungen verstanden werden, die von einer konstanten Auslegungs-Nenn-Spannung um +-5% abweichen.

In einer möglichen Ausführungsform kann das Parksperrenrad auf einem auskragenden, freien Wellenende des drehbar gelagerten Teils der Antriebsanordnung angeordnet sein. Durch die radiale Kraftkomponente beim Einrasten der Parksperre kann das freie Wellende wie ein Biegebalken in die Kraftwirkrichtung gebogen werden. Dadurch kann zusätzliche Deformationsenergie in dem freien Wellenende elastisch gespeichert und die Belastung auf die umliegenden Maschinenelemente somit verringert werden.

In einer weiteren Ausführungsform kann die Mittenebene des Rastabschnitts des Parksperrenrades axial zwischen der Mittenebene des Verbindungsabschnitts des Parksperrenrades und einer Mittenebene des dem Parksperrenrad nächstgelegenen Lagers angeordnet sein. Als nächstgelegenes Lager soll jeweils jenes Lager verstanden werden, das zusammen mit dem Parksperrenrad auf einem drehbar gelagerten Teil der Antriebsanordnung angeordnet ist und den geringsten Abstand zu dem Parksperrenrad aufweist. Hierdurch kann ein kompaktes axiales Baumaß der Parksperreneinheit erreicht werden. Zudem wird dadurch die Krafteingriffsebene der radialen Sperrkräfte in Richtung des jeweiligen nächstgelegenen Lagers verschoben und die resultierende Belastung des Lagers verringert. Insbesondere kann dadurch der Rastabschnitt oberhalb des nächstgelegenen Lagers angeordnet werden. Dazu kann in einer Ausführungsform das Verhältnis des ersten Abstandes A1 zu einem zweiten Abstand A2 zwischen der Mittenebene des Verbindungsabschnitts des Parksperrenrades und einer Mittenebene des dem Parksperrenrades nächstgelegenen Lagers, größer als 0,25, insbesondere größer als 0,35, und/oder kleiner 1, sein.

Im Parksperrengehäuse werden das Sperrelement und der Sperraktuator gelagert. Zudem bildet das Parksperrengehäuse einen Raum in dem das Parksperrenrad aufgenommen werden kann.

Eine Weiterbildung der Erfindung betrifft eine Antriebsanordnung zum elektromotorischen Antreiben eines Kraftfahrzeugs, umfassend: Eine zuvor beschriebene Parksperreneinheit, eine Gehäuseanordnung, einen Elektromotor, der mit der Gehäuseanordnung verbunden ist und eine Motorwelle aufweist, die drehend antreibbar ist; zumindest eine Getriebewelle, und eine Leistungsverzweigungseinheit, wobei die Motorwelle, die zumindest eine Getriebewelle und die Leistungsverzweigungseinheit jeweils drehbar in der Gehäuseanordnung gelagert und über zumindest eine Getriebestufe zur Bewegungs- und Drehmomentenübertragung miteinander verbunden sind, und wobei das drehbar gelagerte Teil, mit dem das Parksperrenrad drehfest verbunden ist, eines der Teile Motorwelle, Getriebewelle und Leistungsverzweigungseinheit (20) ist.

Die Antriebsanordnung mit einer erfindungsgemäßen Parksperreneinheit weist analog dieselben Vorteile auf, wie oben im Zusammenhang mit der Parksperreneinheit beschrieben, worauf abkürzend verwiesen wird.

Bevorzugte Ausführungsformen werden nachstehend anhand der Zeichnungsfiguren erläutert. Hierin zeigt:
- Figur 1a: eine erfindungsgemäße Parksperreneinheit in einem Längsschnitt;
- Figur 1b: eine Teilansicht der Parksperreneinheit gemäß Figur 1a in einem Querschnitt;
- Figur 2: ein Parksperrenrad der Parksperreneinheit gemäß Figur 1 in einer perspektivischen Ansicht;
- Figur 3: eine Elektroantriebsanordnung mit einer erfindungsgemäßen Parksperreneinheit nach Figur 1 in einer perspektivischen Ansicht;
- Figur 4: die Antriebsanordnung nach Figur 3 in einem Längsschnitt IV-IV.

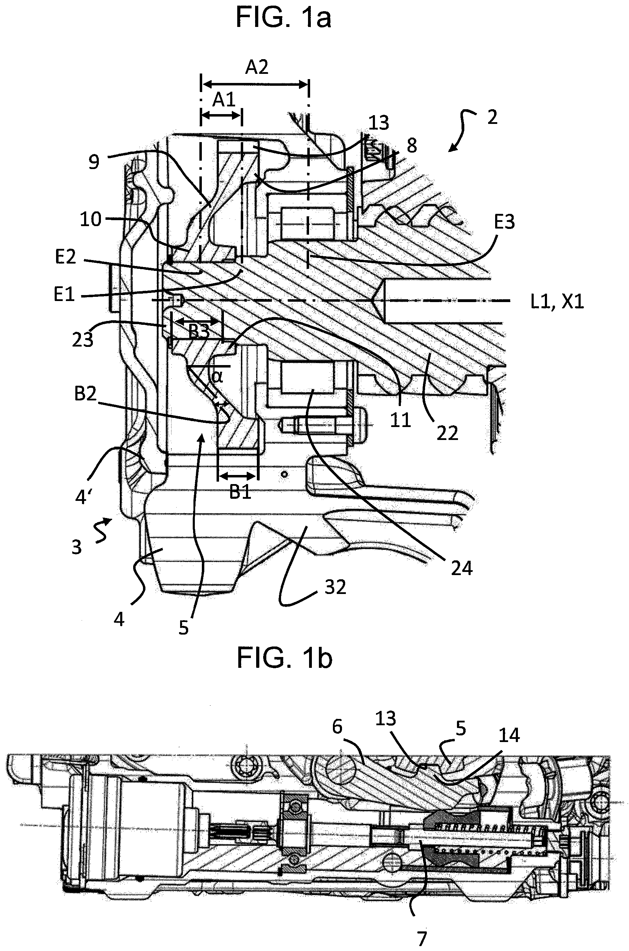

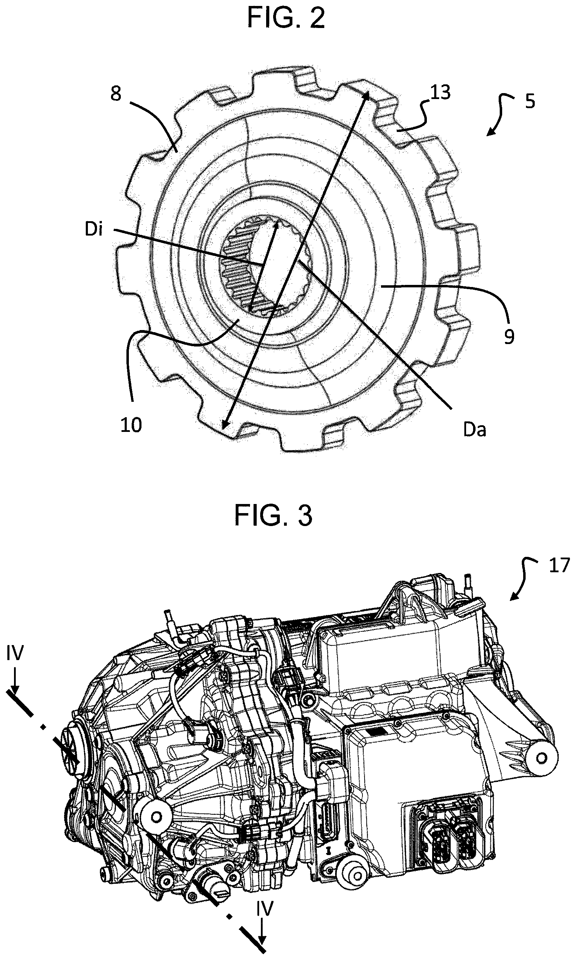

Die Figuren 1 und 2, welche nachstehend gemeinsam beschrieben werden, zeigen eine erfindungsgemäße Parksperreneinheit 2 für eine Antriebsanordnung eines Kraftfahrzeugs. Eine Parksperre dient im Allgemeinen dazu den Leistungspfad der Antriebanordnung reversibel zu blockieren, um ein unbeabsichtigtes Wegrollen des Kraftfahrzeuges zu verhindern.

Die Parksperreneinheit 2 umfasst ein Parksperrengehäuse 3, ein Parksperrenrad 5, das mit drehbar gelagerten Teil 22 einer Antriebseinheit drehfest verbunden ist, ein Sperrelement 6, das in dem Parksperrengehäuse 3 bewegbar gelagert ist. Durch einen steuerbaren Aktuator 7 kann das Sperrelement 6 reversible von einer Sperrposition in eine Freigabeposition überführt werden. Das drehend gelagerte Teil ist vorliegend als Welle ausgestaltet, ohne hierauf eingeschränkt zu sein.

Das Sperrenrad 5 weist radial außenliegenden Rastabschnitt 8 auf, an dessen äußeren Umfangsfläche, die auf einem Außendurchmesser Da liegt, eine Vielzahl gleichmäßig verteilter Rastausnehmungen 13 angeordnet ist, in die das Sperrelement 6 mit einem Sperrzahn 14 formschlüssig eingreifen kann. Das Sperrelement 6 ist in einer Sperrstellung dargestellt, in der es mit dem Sperrenrad 5 formschlüssig verbunden ist, so dass das Parksperrenrad 5 an einer Drehbewegung um die eigene Längsachse gehindert wird. Ausgehend von der Sperrposition kann der Aktuator 7 das Sperrelement 6 reversibel in eine Freigabeposition überführen, in der es außerhalb des Wirkbereichs des Sperrenrad 5 positioniert ist, so dass die mit dem Parksperrenrad 5 drehfest verbundene Welle 22 frei drehbar ist. Der Rastabschnitt 8 weist eine Breite B1 auf, die so dimensioniert ist, dass die durch das Einlegen der Parksperre auftretenden Kräfte und Pressungen sicher vom Parksperrenrad 5 ertragen werden können.

An den Rastabschnitt 8 schließt radial innen ein Stegabschnitt 9 an, der in dieser Ausführungsform weitgehend in einem Anstellwinkel α von 45° gegenüber der Rotationsachse des Parksperrenrades 5 geneigt ist und dessen mittlere Breite B2 in etwa 25% der Breite B1 des Rastabschnitts 8 entspricht. Der Verlauf der Breite B2 des Stegabschnitts 9 von radial außen nach radial innen ist dabei so gewählt, dass die auftretenden Spannungen weitgehend konstant sind. Über die Breite B2 und den Anstellwinkel α lassen sich zudem sowohl die Torsionseigenschaften als auch die Biegeeigenschaften des Stegabschnittes einstellen, sodass diese je nach Anwendungsfall variabel ausgelegt werden können. Alternativ ist auch denkbar, dass der Stegabschnitt 9 einen von gerade abweichenden Verlauf, insbesondere einen mäanderförmigen Verlauf, hat.

Das Parksperrenrad 5 weist zudem radial innenliegend eine Verbindungsabschnitt 10 auf, über den das Parksperrenrad 5 mit einer Welle 22 verbunden ist. In der dargestellten Ausführungsform ist die Verbindung als Keilwellenverzahnung mit einem Nenndurchmesser Di ausgeführt. Alternativ sind auch andere Welle-Nabe-Verbindungen denkbar, beispielsweise eine Pressverbindung. Die Schnittfläche des Verbindungsabschnitts 10 in einem Halblängsschnitt ist T-förmig ausgestaltet. Die Breite B3 des drehmomenttragenden Bereichs des zylindrischen Teils kann so gewählt werden, das auftretende Drehmomente sicher von dem Parksperrenrad 5 auf die Welle übertragen werden können. In der dargestellten Ausführung entspricht die Breite B1 des Rastabschnitts 8 in etwa dem 0,75-fachen der Breite B3 des Verbindungsabschnitts. Axial anschließend an den zylindrischen Teil des Verbindungsabschnitts 10 erstreckt sich ein Positionsabsatz 11, mit dem das Parksperrenrad 5 axial gegenüber der Welle 22 positioniert und abgestützt werden kann. Der radial nach außenstehende Teil des Verbindungsabschnitts 10 dient im Wesentlichen der Anbindungen des Verbindungsabschnitts 10 an den Stegabschnitt 9. Je nach Ausgestaltung des Stegabschnitts 9 kann dieser Teil daher auch entfallen. Der Rastabschnitt 8 ist gegenüber dem Verbindungsabschnitt 10 axial versetzt. Dabei ist zwischen der gedachten Mittenebene E1 des Rastabschnitts 8, die normal auf der Rotationsachse des Parksperrenrades 5 steht, zur gedachten Mittenebene E2 des Verbindungsabschnittes 10 ein Abstand A1 gebildet. Der erste Abstand A1 entspricht in dieser Ausführungsform etwa der Breite B1 des Rastabschnittes bzw. 15% des Außendurchmessers Da des Parksperrenrades 5, ohne darauf beschränkt zu sein.

Durch Einrasten des Sperrelements 6 in das Parksperrenrad 5 wird die kinetische Energie der rotierenden Teile des Leistungspfads, mit dem die Parksperre verbunden ist, in Stoßenergie umgewandelt. Auf das Parksperrenrad 5 wirkt durch den Stoß eine radiale Kraftkomponente und eine tangentiale Kraftkomponente, die zudem ein Torsionsmoment bzw. Bremsmoment induziert. Durch den axialen Versatz der Ebenen E1 und E2 und den dazwischen angeordneten Stegabschnitt 9 wird die Torsionslänge des Leistungspfads erhöht und die Torsionssteifigkeit des Leistungspfads reduziert. Zudem kann der Rastabschnitt 8 des Parksperrenrades 5 radial einfedern. Beide zuvor genannten Effekte führen dazu, dass ein höherer Anteil der Stoßenergie beim Einrasten des Sperrelements 6 in das Parksperrenrad 5 in Spannenergie bzw. (elastische) Deformationsenergie umgesetzt werden kann und die Belastung der umliegenden Maschinenelemente verringert wird.

Das Parksperrengehäuse 3 umfasst in der gezeigten Ausführungsform einen ersten Gehäuseabschnitt 4, der einen Ringraum bildet, und einen zweiten Gehäuseabschnitt 4' in Form eines Gehäusedeckels, der mit dem ersten Gehäuseabschnitt 4 verschraubt ist. Der erste Gehäuseabschnitt 4 ist einteilig mit einem Getriebegehäuse 32 einer Antriebsanordnung ausgeführt. Alternativ ist auch denkbar, dass die Parksperreneinheit 2 modular ausgeführt werden kann und das Parksperrengehäuse 3 so ausgestaltet ist, dass der Gehäuseabschnitt 4 mit dem Gehäuse einer Antriebsanordnung verbindbar ist.

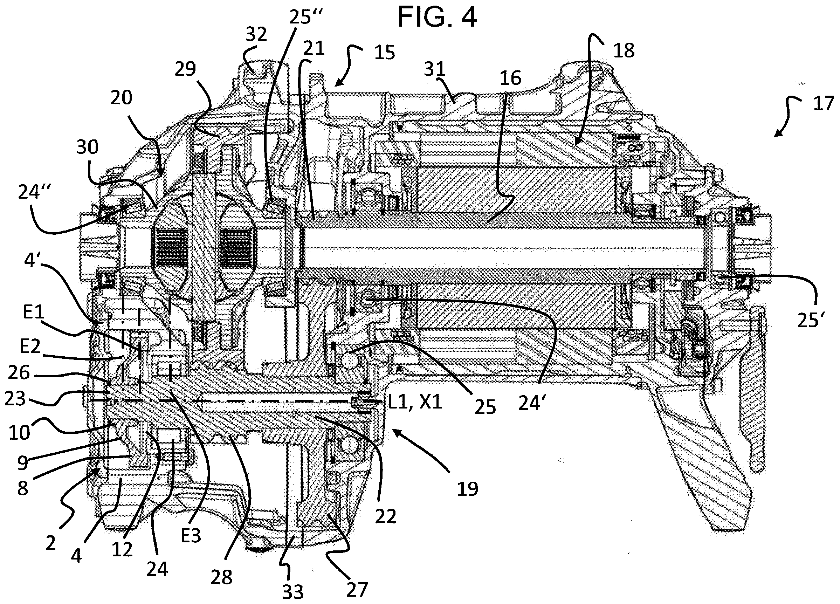

Die Figuren 3 und 4, welche nachstehend gemeinsam beschrieben werden, zeigen einen Elektroantriebsanordnung 17 mit einer erfindungsgemäßen Parksperreneinheit 2 nach den Figuren 1 und 2.

Die Elektroantriebsanordnung 17 umfasst eine elektrische Maschine 18, ein mit der elektrischen Maschine 18 zur Übertragung eines Drehmoments antriebsverbundenes Untersetzungsgetriebe 19, eine wie zuvor beschriebene Parksperreneinheit 2 sowie ein mit dem Untersetzungsgetriebe 19 zur Übertragung eines Drehmoments antriebverbundenes Differentialgetriebe 20. Die Elektroantriebsanordnung 17 umfasst ferner eine Gehäuseanordnung 15, in dem die elektrische Maschine 18, das Untersetzungsgetriebe 19, die erfindungsgemäße Parksperreneinheit 2 und das Differentialgetriebe 20 angeordnet sind.

Das Untersetzungsgetriebe 4 umfasst eine Getriebewelle 22, deren Längsachse parallel versetzt zu der Längsachse einer Motorwelle 16 angeordnet und die über zwei Lager 24, 25 drehbar gelagert ist. Die Getriebewelle 22 kann auch als Zwischenwelle bezeichnet werden. Auf der Getriebewelle 22 ist ein schaltbares Antriebsrad 27 gelagert, das mit einem Antriebsritzel 21 der Motorwelle 16 kämmt. Ein Abtriebsritzel 28 ist drehfest mit der Getriebewelle 22 verbunden und kämmt mit einem Ringrad 29 zum Antreiben des Differentialgetriebes 20. Das Ringrad 29 ist fest mit dem Differentialkorb 30 des Differentialgetriebes 20 verbunden und kann beispielsweise einteilig mit diesem ausgestaltet sein.

Das Parksperrenrad 5 der Parksperreneinheit 2 ist mit einem freien Wellenende 23 der Getriebewelle 22 über eine Welle-Nabe-Verbindung drehfest verbunden und durch einen Sicherungsring 26 axial gesichert. Das Parksperrenrad 5 weist einen Rastabschnitt 8, einen Stegabschnitt 9 und einen Verbindungsabschnitt 10 auf. Die Mittenebene E1 des Rastabschnittes 8 weist einen geringeren Abstand zu der Mittenebene E3 des Lagers 24 auf als die Mittenebene E2 des Verbindungsabschnittes 10. Der Rastabschnitt 8 ist teilweise in axialer Überdeckung mit einem Gehäuseabschnitt in dem das Lager 24 drehbar gelagert ist angeordnet. Hierdurch kann der axiale Bauraum der Elektroantriebsanordnung 17 verringert werden. Zudem rückt die Krafteingriffsebene der radialen Kraftkomponente eines Stoßes beim Einrasten des Sperrelements 6 in das Parksperrenrad 5 an das Lager 24 heran. Dadurch wird die resultierende Belastung des Lagers 24 verringert.

Durch den Stegabschnitt 9 wird die resultierende Torsionslänge des Leistungspfads zwischen dem Parksperrenrad und den Abtriebswellen des Differentials 20 (nicht dargestellt) einerseits und zwischen dem Parksperrenrad und der Antriebseinheit andererseits erhöht und die Torsionssteifigkeit des Leistungspfades reduziert. Zudem kann der Rastabschnitt 8 beim Einrasten der Parksperre radial ausweichen. Durch diese beiden Effekte kann mehr Energie des Stoßes beim Einrasten des Sperrelements 6 in das Parksperrenrad 5 in Spannenergie bzw. (elastische) Deformationsenergie umgesetzt werden, sodass die Belastung der Maschinenelemente der Elektroantriebsanordnung 17 reduziert wird.

Durch die Anordnung des Parksperrenrades 5 auf dem freien Wellenende 23 kann zusätzliche Deformationsenergie absorbiert werden, da bei radialer Belastung des Parkrades 5 das freie Wellenende 22 entsprechend eines Biegebalkens ebenfalls radial in Richtung der Krafteinleitungsrichtung ausweichen kann.

Die Gehäuseanordnung 15 ist aus mehreren einzelnen Gehäuseteilen zusammengesetzt. Insbesondere umfasst die Gehäuseanordnung 15 einen ersten Gehäuseabschnitt 31, in dem die elektrische Maschine 18 sowie das Lager 25 der Getriebewelle 22 aufgenommen ist, sowie einen zweiten Gehäuseabschnitt 32 und eine Zwischenplatte 33, in denen das Differentialgetriebe 20 und das Lager 24 aufgenommen ist. Die Zwischenplatte 33 ist zwischen dem ersten und zweiten Gehäuseabschnitt 31, 32 angeordnet und mit diesen fest verbunden. Das Parksperrengehäuse 3 ist in dieser Ausführungsform teilweise in dem Gehäuseabschnitt 32 intergiert. Es ist aber auch denkbar, dass das Parksperrengehäuse 3 separat ausgeführt wird und mit dem Gehäuseabschnitt 32 lösbar verbindbar ist.

### Bezugszeichenliste

- 2: Parksperrenanordnung
- 3: Parksperrengehäuse
- 4,4': Gehäuseabschnitt
- 5: Sperrenrad
- 6: Sperrelement
- 7: Aktuator
- 8: Rastabschnitt
- 9: Stegabschnitt
- 10: Verbindungsabschnitt
- 11: Positionsabsatz
- 12 13: Rastausnehmungen
- 14: Sperrzahn
- 15: Gehäuseanordnung
- 16: Motorwelle
- 17: Elektroantriebsanordnung
- 18: elektrische Maschine
- 19: Untersetzungsgetriebe
- 20: Differentialgetriebe
- 21: Antriebsrad
- 22: Getriebewelle
- 23: freies Wellenende
- 24, 24', 24": Lager
- 25, 25', 25": Lager
- 26: Sicherungsring
- 27: Antriebsrad
- 28: Abtriebsrad
- 29: Ringrad
- 30: Differentialkorb
- 31: Gehäuseabschnitt
- 32: Gehäuseabschnitt
- 33: Zwischenplatte
- A: Abstand
- B: Breite
- E: Mittelebene
- α: Anstellwinkel

## Patentansprüche

1. Parksperreneinheit (2) für eine Antriebsanordnung (17), insbesondere mit einem Elektromotor (18), umfassend:
ein Parksperrengehäuse (3),
ein Parksperrenrad (5), das mit einem durch zumindest ein Lager (24, 24', 24",25, 25', 25") um eine Drehachse (X1) drehbar gelagerten Teil (22) der Antriebsanordnung (17) drehfest verbunden ist und einen Verbindungsabschnitt (10) sowie einen Rastabschnitt (8), die über einen Stegabschnitt (9) miteinander verbunden sind, aufweist, wobei das Parksperrenrad (5) so ausgestaltet ist, dass der Rastabschnitt (8) gegenüber dem Verbindungsabschnitt (10) axial versetzt ist,
ein Sperrelement (6), das in dem Parksperrengehäuse (3) gelagert ist und eine Drehbewegung des Parksperrenrades (5) um eine Längsachse des Parksperrenrades (5) sperren und freigeben kann, und
einen steuerbaren Sperraktuator (7), der das Sperrelement (6) reversibel in eine das Parksperrenrad (5) sperrende Position und eine das Parksperrenrad (5) freigebende Position überführen kann,
**dadurch gekennzeichnet,**
**dass** eine Mittenebene (E1) des Rastabschnitts (8) des Parksperrenrades (5) zu einer Mittenebene (E2) des Verbindungsabschnitts (10) des Parksperrenrades (5) einen ersten Abstand (A1) aufweist, der größer ist als eine kleinste axiale Dicke (B2) des Stegabschnitts.

2. Parksperreneinheit nach Anspruch 1,
**dadurch gekennzeichnet,**
**dass** der Stegabschnitt (9) zumindest in einem Teilbereich eine dünnere Wandung aufweist, als der Rastabschnitt (8) und der Verbindungsabschnitt (10).

3. Parksperreneinheit nach einem der Ansprüche 1 oder 2,
**dadurch gekennzeichnet,**
**dass** eine Breite (B2) der Wandung des Stegabschnitts (9) zumindest in einem Teilbereich von radial außen nach radial innen so zunimmt, dass die auftretenden Spannungen in diesem Teilbereich zumindest weitgehend konstant sind.

4. Parksperreneinheit nach einem der Ansprüche 1 bis 3,
**dadurch gekennzeichnet,**
**dass** das Parksperrenrad (5) auf einem auskragenden, freien Wellenende (23) des drehbar gelagerten Teils (22) der Antriebsanordnung (17) angeordnet ist.

5. Parksperreneinheit nach einem der Ansprüche 1 bis 4,
**dadurch gekennzeichnet,**
**dass** die Mittenebene (E1) des Rastabschnitts (8) des Parksperrenrades (5) axial zwischen der Mittenebene (E2) des Verbindungsabschnitts (10) des Parksperrenrades (5) und einer Mittenebenen (E3) des dem Parksperrenrad nächstgelegenen Lagers (24, 24', 24",25, 25', 25") angeordnet ist.

6. Parksperreneinheit nach einem der Ansprüche 1 bis 5,
**dadurch gekennzeichnet,**
**dass** das Verhältnis des ersten Abstandes (A1) zu einem zweiten Abstand (A2) zwischen der Mittenebene (E2) des Verbindungsabschnitts (10) des Parksperrenrades (5) und einer Mittenebene (E3) des dem Parksperrenrades nächstgelegenen Lagers (24, 24', 24",25, 25', 25"), größer als 0,25, insbesondere größer als 0,35, und/oder kleiner 1, ist.

7. Parksperreneinheit nach einem der Ansprüche 1 bis 6,
**dadurch gekennzeichnet,**
**dass** das Verhältnis des ersten Abstandes (A1) zu einem Außendurchmesser (Da) des Parksperrenrades (5) größer als 0,08, insbesondere größer als 0,10, und/oder kleiner als 0,5, insbesondere kleiner als 0,4, ist.

8. Parksperreneinheit nach Anspruch 7,
**dadurch gekennzeichnet,**
**dass** das Verhältnis des ersten Abstandes (A1) zu einer Breite (B1) des Parksperrenrades (5) an dem Außendurchmesser (Da) größer als 0,85, insbesondere größer 0,9, insbesondere größer als 0,95, und /oder kleiner als 3, insbesondere kleiner als 2,7, ist.

9. Parksperreneinheit nach Anspruch 8,
**dadurch gekennzeichnet,**
**dass** das Verhältnis von der Breite (B1) des Parksperrenrades (5) an dem Außendurchmesser (Da) zu einer Breite (B3) des Parksperrenrades (5) an einem Innendurchmesser (Di) kleiner 1,0, insbesondere kleiner 0,85, insbesondere 0,8, und/oder größer 0,7, insbesondere größer 0,75, ist.

10. Antriebsanordnung zum elektromotorischen Antreiben eines Kraftfahrzeugs, umfassend:
eine Parksperreneinheit (2) nach einem der Ansprüche 1 bis 9,
eine Gehäuseanordnung (15),
einen Elektromotor (18), der mit der Gehäuseanordnung (15) verbunden ist und eine Motorwelle (16) aufweist, die drehend antreibbar ist;
zumindest eine Getriebewelle (22), und
eine Leistungsverzweigungseinheit (20),
wobei die Motorwelle (16), die zumindest eine Getriebewelle (22) und die Leistungsverzweigungseinheit (20) jeweils drehbar in der Gehäuseanordnung (15) gelagert und über zumindest eine Getriebestufe zur Bewegungs- und Drehmomentenübertragung miteinander verbunden sind, und
wobei das drehbar gelagerte Teil (22), mit dem das Parksperrenrad (5) drehfest verbunden ist, eines der Teile Motorwelle (16), Getriebewelle (22) und Leistungsverzweigungseinheit (20) ist.

## Claims

1. Parking lock unit (2) for a drive assembly (17), in particular with an electric motor (18), comprising:
a parking lock housing (3),
a parking ratchet wheel (5) connected in a rotationally fixed manner to a part (22) of the drive assembly (17), that is rotatably supported about an axis of rotation (X1) by at least one bearing (24, 24', 24", 25, 25', 25"), and comprising a connecting portion (10) and an engagement portion (8) which are connected to one another via a web portion (9), wherein the parking ratchet wheel (5) is formed such that the engagement portion (8) is axially offset with respect to the connecting portion (10),
a locking element (6) which is supported in the parking lock housing (3) and can lock and release a rotational movement of the parking ratchet wheel (5) about a longitudinal axis of the parking ratchet wheel (5), and
a controllable locking actuator (7) which can reversibly transfer the locking element (6) into a position locking the parking ratchet wheel (5) and a position releasing the parking ratchet wheel (5),
**characterized in**
**that** a central plane (E1) of the engagement portion (8) of the parking ratchet wheel (5) has a first distance (A1) to a central plane (E2) of the connecting portion (10) of the parking ratchet wheel (5) which is greater than a smallest axial thickness (B2) of the web portion.

2. Parking lock unit according to claim 1,
**characterized in**
**that** the web portion (9) has a thinner wall, at least in a partial region, than the engagement portion (8) and the connecting portion (10).

3. Parking lock unit according to one of claims 1 or 2,
**characterized in**
**that** a width (B2) of the wall of the web portion (9) increases, at least in a partial region, from radially outside to radially inside such that the stresses occurring in this partial region are at least substantially constant.

4. Parking lock unit according to any one of claims 1 to 3,
**characterized in**
**that** the parking ratchet wheel (5) is arranged on a projecting free shaft end (23) of the rotatably supported part (22) of the drive assembly (17).

5. Parking lock unit according to any one of claims 1 to 4,
**characterized in**
**that** the central plane (E1) of the engagement portion (8) of the parking ratchet wheel (5) is arranged axially between the central plane (E2) of the connecting portion (10) of the parking ratchet wheel (5) and a central plane (E3) of the bearing (24, 24', 24",25, 25', 25") arranged closest the parking ratchet wheel.

6. Parking lock unit according to one of claims 1 to 5,
**characterized in**
**that** the ratio of the first distance (A1) to a second distance (A2) between the center plane (E2) of the connecting portion (10) of the parking ratchet wheel (5) and a center plane (E3) of the bearing (24, 24', 24", 25, 25', 25") closest to the parking ratchet wheel is greater than 0.25, in particular greater than 0.35, and/or less than 1.

7. Parking lock unit according to one of claims 1 to 8,
**characterized in**
**that** the ratio of the first distance (A1) to an outer diameter (Da) of the parking ratchet wheel (5) is greater than 0.08, in particular greater than 0.10, and/or less than 0.5, in particular less than 0.4.

8. Parking lock unit according to claim 7,
**characterized in**
**that** the ratio of the first distance (A1) to a width (B1) of the parking ratchet wheel (5) at the outer diameter (Da) is greater than 0.85, in particular greater than 0.9, in particular greater than 0.95, and/or less than 3, in particular less than 2.7.

9. Parking lock unit according to claim 8,
**characterized in**
**that** the ratio of the width (B1) of the parking ratchet wheel (5) at the outer diameter (Da) to a width (B3) of the parking ratchet wheel (5) at an inner diameter (Di) is less than 1.0, in particular less than 0.85, in particular 0.8, and/or greater than 0.7, in particular greater than 0.75.

10. A drive assembly for electromotively driving a motor vehicle, comprising:
a parking lock unit (2) according to any one of claims 1 to 9,
a housing assembly (15),
an electric motor (18) connected to the housing assembly (15) and having a motor shaft (16) which is rotatably drivable;
at least one transmission shaft (22), and
a power split unit (20),
wherein the motor shaft (16), the at least one transmission shaft (22) and the power splitting unit (20) are each rotatably supported in the housing assembly (15) and are connected to each other via at least one gear stage for transmitting motion and torque, and
wherein the rotatably supported part (22) to which the parking ratchet wheel (5) is connected in a rotationally fixed manner is one of the parts motor shaft (16), transmission shaft (22) and power split unit (20).

## Revendications

1. Unité de frein de stationnement (2) pour un ensemble d'entraînement (17), avec en particulier un moteur électrique (18), comprenant :
un boîtier de frein de stationnement (3),
une roue de frein de stationnement (5) qui est reliée fixe en rotation à une partie (22) de l'ensemble d'entraînement (17) pouvant tourner sur un pivot (X1) par au moins un palier (24, 24', 24", 25, 25', 25") et présente un tronçon de liaison (10) ainsi qu'un tronçon d'encliquetage (8) qui sont reliés entre eux par un tronçon de traverse (9), dans lequel la roue de frein de stationnement (5) est ainsi conçue que le tronçon d'encliquetage (8) est décalé axialement par rapport au tronçon de liaison (10),
un élément de frein (6) qui est disposé dans le boîtier de frein de stationnement (3) et peut freiner et libérer un mouvement de rotation de la roue de frein de stationnement (5) autour un axe longitudinal de la roue de frein de stationnement (5), et
un actionneur de frein (7) pouvant être commandé qui peut faire passer l'élément de frein (6) de manière réversible dans une position freinant la roue de frein de stationnement (5) et une position libérant la roue de frein de stationnement (5),
**caractérisée en ce**
**qu'**un plan médian (E1) du tronçon d'encliquetage (8) de la roue de frein de stationnement (5) présente un premier écart (A1) par rapport à un plan médian (E2) du tronçon de liaison (10) de la roue de frein de stationnement (5) qui est plus grand qu'une plus petite épaisseur axiale (B2) du tronçon de traverse.

2. Unité de frein de stationnement selon la revendication 1,
**caractérisée en ce que**
le tronçon de traverse (9) présente au moins dans une partie, une paroi plus fine que le tronçon d'encliquetage (8) et le tronçon de liaison (10).

3. Unité de frein de stationnement selon la revendication 1 ou 2,
**caractérisée en ce**
**qu'**une largeur (B2) de la paroi du tronçon de traverse (9) augmente radialement de l'extérieur vers radialement de l'intérieur, au moins dans une partie de telle façon que les tensions qui se produisent dans cette partie sont au moins constantes dans une large mesure.

4. Unité de frein de stationnement selon l'une des revendications 1 à 3,
**caractérisée en ce que**
la roue de frein de stationnement (5) est disposée sur un bout d'arbre (23) libre en porte-à-faux de la partie (22) de l'ensemble d'entraînement (17) placée en rotation.

5. Unité de frein de stationnement selon l'une des revendications 1 à 4,
**caractérisée en ce que**
le plan médian (E1) du tronçon d'encliquetage (8) de la roue de frein de stationnement (5) est disposé axialement entre le plan médian (E2) du tronçon de liaison (10) de la roue de frein de stationnement (5) et un plan médian (E3) du palier (24, 24', 24", 25, 25', 25") placé le plus proche de la roue de frein de stationnement.

6. Unité de frein de stationnement selon l'une des revendications 1 à 5,
**caractérisée en ce que**
le rapport du premier écart (A1) à un second écart (A2) entre le plan médian (E2) du tronçon de liaison (10) de la roue de frein de stationnement (5) et un plan médian (E3) du palier (24, 24', 24", 25, 25', 25") placé le plus proche de la roue de frein de stationnement est supérieur à 0,25, en particulier supérieur à 0,35, et/ou est inférieur à 1.

7. Unité de frein de stationnement selon l'une des revendications 1 à 6,
**caractérisée en ce que**
le rapport du premier écart (A1) à un diamètre extérieur (Da) de la roue de frein de stationnement (5) est supérieur à 0,08, en particulier supérieur à 0,10, et/ou inférieur à 0,5, en particulier inférieur à 0,4.

8. Unité de frein de stationnement selon la revendication 7,
**caractérisée en ce que**
le rapport du premier écart (A1) à une largeur (B1) de la roue de frein de stationnement (5) au diamètre extérieur (Da) est supérieur à 0,85, en particulier supérieur à 0,9, en particulier supérieur à 0,95, et/ou inférieur à 3, en particulier inférieur à 2,7.

9. Unité de frein de stationnement selon la revendication 8,
**caractérisée en ce que**
le rapport de la largeur (B1) de la roue de frein de stationnement (5) au diamètre extérieur (Da) à une largeur (B3) de la roue de frein de stationnement (5) à un diamètre intérieur (Di) est inférieur à 1, en particulier inférieur à 0,85, en particulier 0,8, et/ou supérieur à 0,7, en particulier supérieur à 0,75.

10. Ensemble d'entraînement pour l'entraînement par moteur électrique d'un véhicule, comprenant :
une unité de frein de stationnement (2) selon l'une des revendications 1 à 9,
un ensemble de boîtier (15),
un moteur électrique (18) qui est relié à l'ensemble de boîtier (15) et présente un arbre moteur (16) qui peut être entraîné en rotation ;
au moins un arbre de transmission (22), et
une unité de répartition de couple (20),
dans lequel l'arbre moteur (16), l'au moins un arbre de transmission (22) et l'unité de répartition de couple (20) sont disposés respectivement en pouvant tourner dans l'ensemble de boîtier (15) et sont reliés entre eux par au moins un rapport de transmission pour la transmission de couple de mouvement et de rotation entre eux, et
dans lequel la partie montée rotative (22) avec laquelle la roue de frein de stationnement (5) est reliée fixe en rotation, est une des pièces arbre moteur (16), arbre de transmission (22) et unité de répartition de couple (20) .
